# EUROPEAN PATENT APPLICATION

(11) **EP 1 188 365 A1**
(43) Date of publication of application: **20.03.2002**
(21) Application number: 00830619.3
(22) Date of filing: 15.09.2000
(51) Int. Cl.: A01G 27/00

(54) **Water-accumulation device with root direct adduction to place on the bottom of pots for plants**

(71) Applicant: Impernovo S.r.l., 41034 Finale Emilia, (Modena) (IT)
(72) Inventor: Baraldi, Vittorio, 41034 Finale Emilia, (Modena) (IT)
(74) Representative: Sassatelli, Franco T., Dr.

(57) **Abstract**

The device to be formed by a certain quantity of curved expanded porous bodies (1) to permit the liquid englobing and to be contained in direct contact inside a non woven fabric wrapping, so permitting a suitable filtering action by adduction and the penetration of the roots, formed with resistance lines (2) actuating for folding of thermowelding parts so to stabilizing the filtering walls (3). For the use the water-accumulation device (1-2-3) is placed on the bottom of a pot (4) and it is completed put on it a plant (5) with the ground (6).

## Description

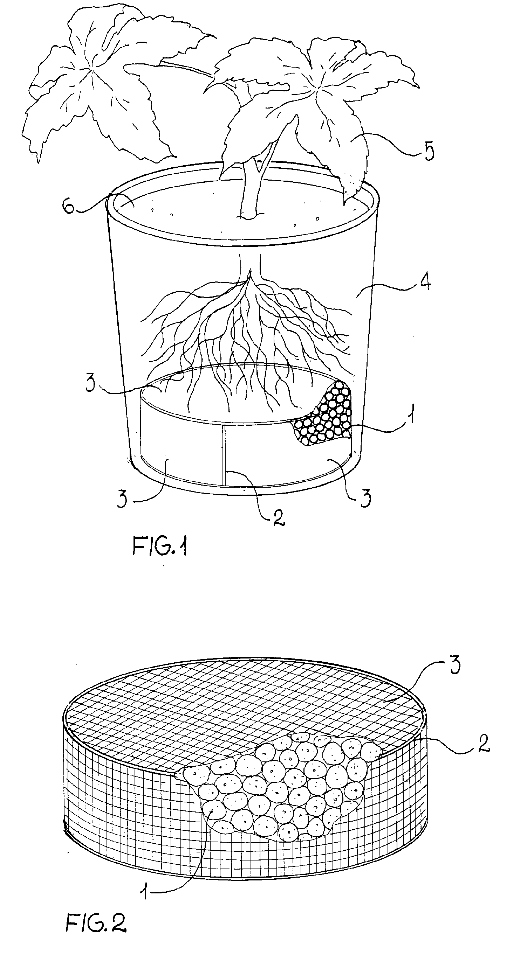

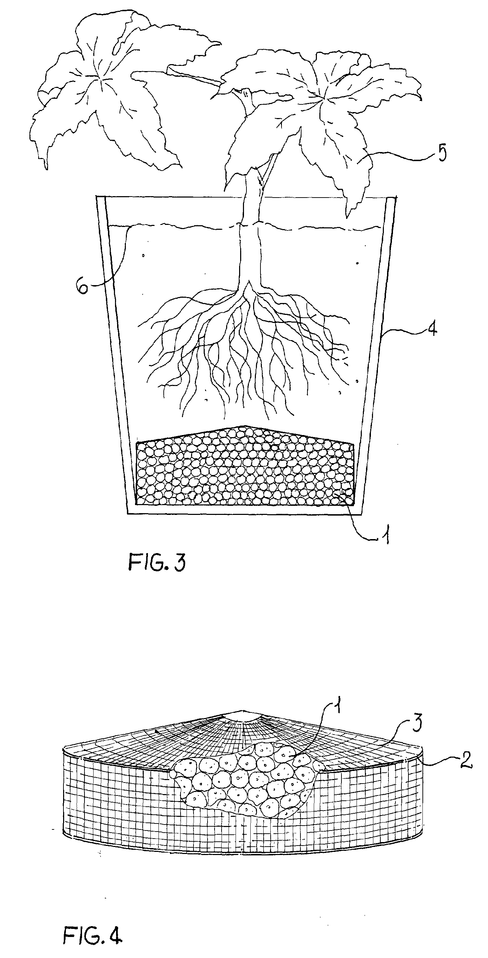

The invention refers to a new water-accumulation device to be used in the cultivation of the plants into a pot. The means determines in the beginning part of the pot a water storing up for the direct adduction of the roots so substantially increasing the alive capacity of the plant. This through a new device to be freely placed on the potting bottom in which both the watering than the rain-waters come together for land absorption. Principally it comes to be foundamental characteristic of the device its absorption capacity able to form a water accumulation for englobing into a means that keeps the same device in position and protects it from the evaporation due to the pot overheating. Other characteristic is the permanent filtering which determines the total availability of the water for the roots. It is a consequence that the device forms an alternative means what is obtained in the ground cultivation of the garden plants and with the advantage, opportunely regulating the nourishing elements use, to have botanic garden results with direct control of the operator. Preliminarily it is to be considered that while for the producer the cultivation of the plants into pots comes to concern only a small time good for bringing the same plants in a first stage for the sell with subsequent positioning on the ground or in a pot and this does not create problems such as all happens into the plantation, the preservation of the platns into the pots for the buyer comes to require a particular care and specific know-how since are to be considered the exposure to the sunlight and to the severety of the weather and generally it is necessary to proceed with periodic watering eventaully with nourishing elements use. In each case actually is an unsurmountable problem for preservation of a plant into a pot the impossibility to give it something able to sufficiently have a substituting effect of what the same plant could have into a fertile ground in a garden: i.e. of a bottom into which the roots can penetrate bringing the vital substances. The problem is so evident and of fountalment interest that it appears clear that if a valid solution was known, without forms a manufacturing unsurmontable problem, it should be immediately put on the market on the base of the high turn over presents in this sector. The invented water-accumulation device with root direct adduction acts with imbibition effect and it is characterized by a mass of expanded clay curved porous bodies. Said bodies, produced by blowing or similar working from slates, igneous rocks or others, to be put in direct contact inside a non woven fabric net wrapping or other able to permit the liquid adduction and the penetration of the roots. Said wrapping to be shaped for its putting in the beginning part of the pot in which the plant will be then collocated. The wrapping is to be realized with permanent disposition maintenance by setting out of its filtering walls on stabilization lines to be manufactur ed by thermowelding or other. In a preferred embodiment an accumulation device is provided acting for imbibition of the watering or/and rain water liquids filter through the solid ground. Said device to be freely placed on the potting bottom completely occuping the same for a certain height. The accumulation device to be formed by a certain quantity of curved expanded porous bodies 1 to permit the liquid englobing and to be produced by hot blowing of clay or other similar materials such as slates, igneous rocks or composit materials. Said bodies to be contained in direct contact inside a non woven fabric wrapping able to permit a suitable filtering action by adduction and the penetration of the roots. The wrapping to be formed with resistance lines 2 actuating for folding of thermowelding parts so to stabilizing the filtering walls 3. For the use the water-accumulation device 1-2-3 is placed on the bottom of a pot 4 and it is completed put on it a plant 5 with the ground 6. In a particular embodiment the accumulation device 1-2-3 has a top flat wrapping wall to satisfy particular necessity of the cultivated plants. In an other embodiment the accumulation device 1-2-3 has a top cone-shaped wrapping wall to be used for the cultivation of only one plant and for satisfying particular necessities. The invented device is illustrated in two embodiments in the drawings of sheets 1 and 2. In sheet 1 fig. 1 is perspective broken view of a water-accumulation device 1-2-3 to show the absorbent bodies 1 and placed on the pot bottom 4 arranged with a plant 5 in position into the ground 6. It is to be noted in the view the roots positioned over the water-accumulation device 1-2-3. Fig. 2 is view, always broken, of a water-accumulation device 1-2-3 of the same type of that of fig. 1. In sheet 2 fig. 3 is a longitudinal section view of a pot alternatively using a water-accumulation device 1-2-3 with top cone-shaped wall. Fig. 4 is perspective broken view of a device as illustrated in fig. 3. In the current realization the type of working and the used material to form the bodies 1 will use all the known technologies and also the wrappings could be different provided.

## Claims

1. Water-accumulation device with root direct adduction to place on the bottom of pots for plants acting for imbibition of the watering or/and rain water liquids filter through the solid ground which is to be freely placed on the potting bottom completely occuping the same for a certain height, **characterized in that** it is formed by a certain quantity of curved expanded porous bodies (1) to permit the liquid englobing and to be produced by hot blowing of clay or other similar materials such as slates, igneous rocks or composit materials; said bodies to be contained in direct contact inside a non woven fabric wrapping able to permit a suitable filtering action by adduction and the penetration of the roots; the wrapping to be formed with resistance lines (2) actuating for folding of thermowelding parts' so to stabilizing the filtering walls (3); and where said water-accumulation device (1-2-3) for the use is placed on the bottom of a pot (4) and it is completed put on it a plant (5) with the ground (6).

2. Water-accumulation device with root direct adduction to place on the bottom of pots for plants, as per claim 1, **characterized in that** in an embodiment it has a top flat wrapping wall to satisfy particular necessity of the cultivated plants.

3. Water-accumulation device with root direct adduction to place on the bottom of pots for plants, as per claim 1, **characterized in that** in an embodiment it has a top cone-shaped wrapping wall to be used for the cultivation of only one plant.
